# EUROPEAN PATENT SPECIFICATION

(11) **EP 1 690 783 B1**
(45) Date of publication and mention of the grant of the patent: **21.10.2009**
(21) Application number: 05002632.7
(22) Date of filing: 09.02.2005
(51) Int. Cl.: B62M 3/08

(54) **Racing type pedal and racing type pedal set for a bicycle**
Fahrradpedal und Fahrradpedalsystem
Pédale de bicyclette et assemblage de pédale

(43) Date of publication of application: 16.08.2006
(73) Proprietor: Xie, Jin-Long, Taichung, Taiwan (TW)
(72) Inventor: Xie, Jin-Long, Taichung, Taiwan (TW)
(74) Representative: Panten, Kirsten

(56) References cited:
- DE-U1-202004 012 851
- US-A1- 2004 231 454

## Description

The present invention relates to a racing type pedal set including a racing type pedal and a snap block structure, and more particularly to a racing type pedal set for a bicycle.

In general, a racing type pedal for a bicycle includes a road-use pedal and a mountaineering pedal, and the two different types of pedals need to mate with two different types of shoes and snap blocks. In practice, the snap block is mounted on the bottom of the bicycle shoe and snapped onto the bicycle pedal to secure the bicycle shoe on the bicycle pedal.

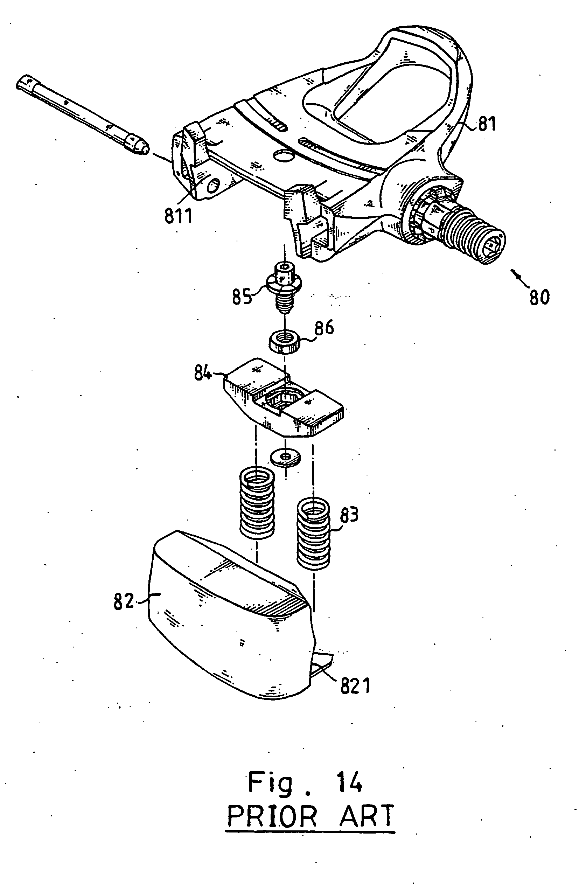

A conventional racing type pedal 80 in accordance with the prior art shown in Fig. 14 comprises a main body 81 having a receiving recess 811, a pivot hook 82 pivotally mounted on the main body 81 and having a receiving recess 821, two restoring springs 83 mounted between the main body 81 and the pivot hook 82, an adjusting block 84 pressed on the two restoring springs 83, a positioning nut 86 secured in the adjusting block 84, and an adjusting screw 85 having a first end rotatably mounted on the main body 81 and a threaded second end screwed into the positioning nut 86. Thus, the adjusting screw 85 is rotated to press the positioning nut 86 which presses the adjusting block 84 which presses the two restoring springs 83 so as to adjust the tension and torque of the pivot hook 82.

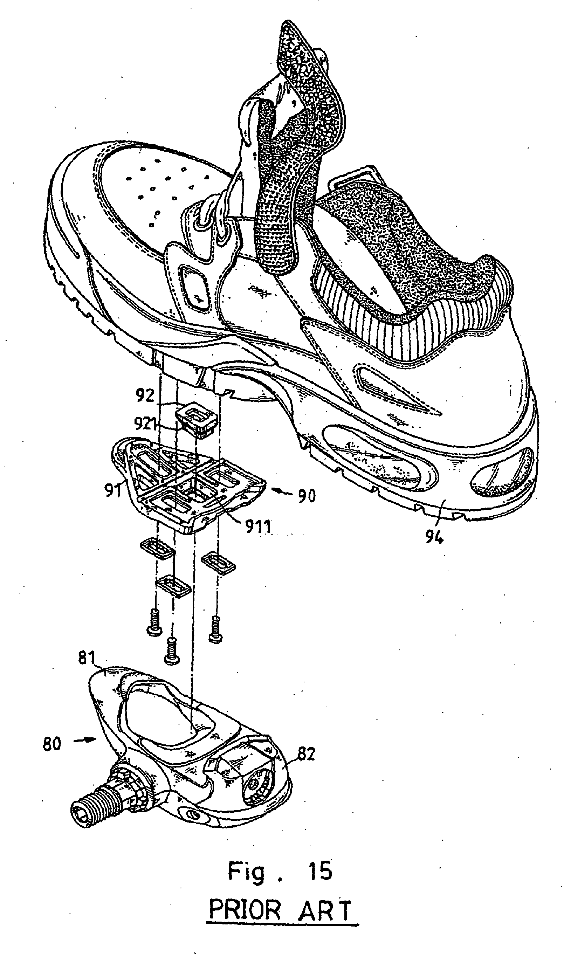

A conventional snap block structure 90 in accordance with the prior art shown in Fig. 15 is locked on each of a pair of road-use bicycle shoes 94 and placed on the racing type pedal 80, so that the racing type pedal 80 is available for the road-use bicycle shoes 94. The snap block structure 90 comprises a snapping plate 91 secured on the bottom of each of the road-use bicycle shoes 94 and formed with an insertion recess 911, and an anti-skid pad 92 mounted between the bottom of each of the road-use bicycle shoes 94 and the snapping plate 91 and formed with an insert 921 extended through the insertion recess 911 of the snapping plate 91 and rested on the racing type pedal 80 to provide an anti-skid effect, so that each of the road-use bicycle shoes 94 is placed on the racing type pedal 80 stably.

US 2004/0231454 discloses a race type pedal set with a snap block structure.

DE 20 2004 012 851 discloses a racing type pedal according to the preamble of claim 1. The racing type pedal is used with a snap block structure. The racing type pedal comprises a main body; a pivot hook pivotally mounted on the main body by a pivot shaft; a metallic bushing mounted on the pivot hook and having a first end formed with a mounting tube extended through the pivot hook and directed toward the main body; an adjusting bolt mounted on the bushing and having a distal end extended through and protruding outward from the mounting tube of the bushing; a press block mounted on the distal end of the adjusting bolt and located between the main body and the pivot hook; and two torsion springs each mounted on the pivot shaft and each having a first end urged on the main body and a second end urged on the press block.

The object of the present invention is to provide a racing type pedal set for mountaineering shoes which is based on a pedal set suitable for road-use bicycle shoes.

The object of the present invention is solved by a racing type pedal set according to the characterizing portion of claim 1.

According to the invention, the snap block structure comprises a snapping plate formed with a locking hole; an anti-skid pad mounted in the locking hole of the snapping plate and protruded outward from the snapping plate; and an insertion plate mounted on the snapping plate and protruded outward from a top face of the snapping plate.

Advantageously, a racing type pedal set suitable for road-use bicycle shoes can be used for mountaineering bicycle shoes simply by adding an insertion plate.

Preferred embodiments of the present invention are given in the dependent claims 1 to 9.

Further benefits and advantages of the present invention will become apparent after a careful reading of the detailed description with appropriate reference to the accompanying drawings.

In the drawings:
Fig. 1 is a perspective view of a racing type pedal in accordance with the preferred embodiment of the present invention;
Fig. 2 is an exploded perspective view of the racing type pedal as shown in Fig. 1;
Fig. 3 is a partially exploded perspective view of the racing type pedal as shown in Fig. 1;
Fig. 4 is a bottom plan view of the racing type pedal as shown in Fig. 1.
Fig. 5 is a plan cross-sectional view of the racing type pedal as shown in Fig. 1;
Fig. 6 is a partially exploded perspective view of the racing type pedal as shown in Fig. 1;
Fig. 7 is an exploded perspective view of a snap block structure in accordance with the preferred embodiment of the present invention;
Fig. 8 is a perspective assembly view of the snap block structure as shown in Fig. 7;
Fig. 9 is a partially cut-away plan cross-sectional view of the snap block structure as shown in Fig. 8;
Fig. 10 is a perspective view of a snap block structure in accordance with another embodiment of the present invention;
Fig. 11 is an exploded perspective view of the snap block structure as shown in Fig. 10;
Fig. 12 is a plan cross-sectional view of the snap block structure as shown in Fig. 10;
Fig. 13 is a perspective view of a snap block structure in accordance with another embodiment of the present invention;
Fig. 14 is an exploded perspective view of a conventional racing type pedal in accordance with the prior art; and
Fig. 15 is an exploded perspective view of a conventional snap block structure in accordance with the prior art.

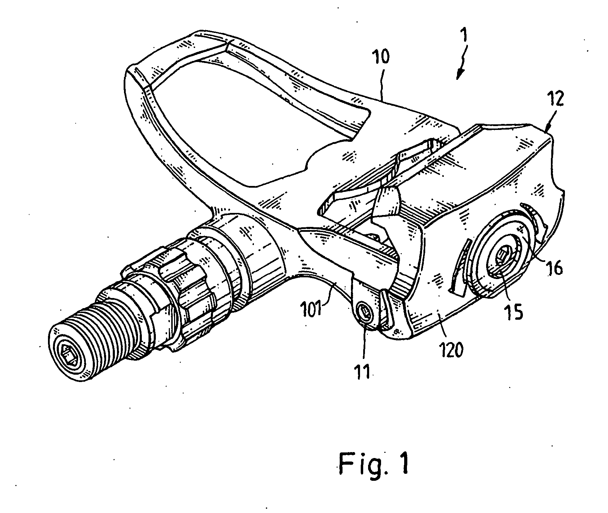

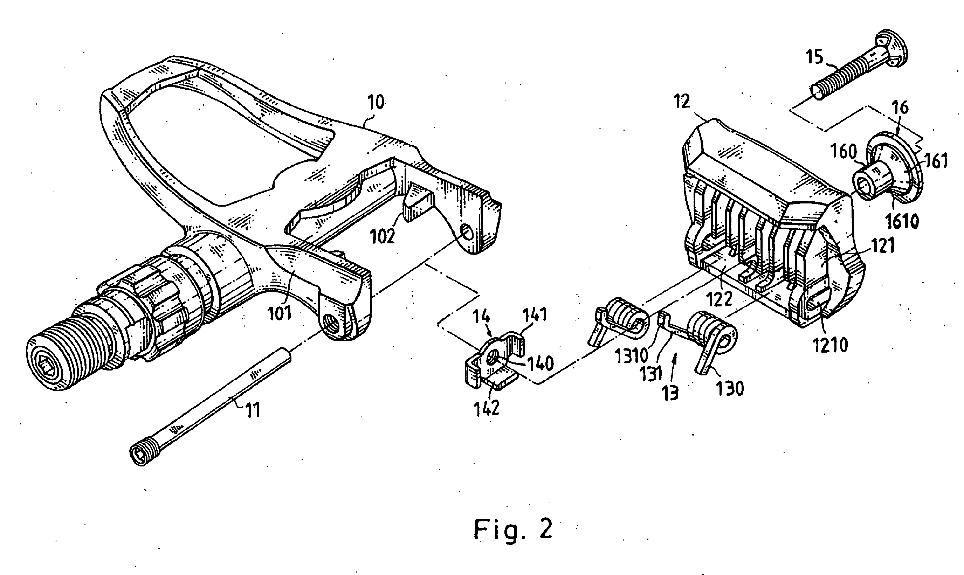

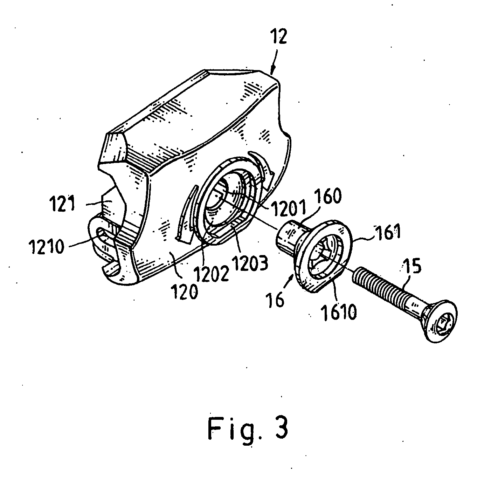

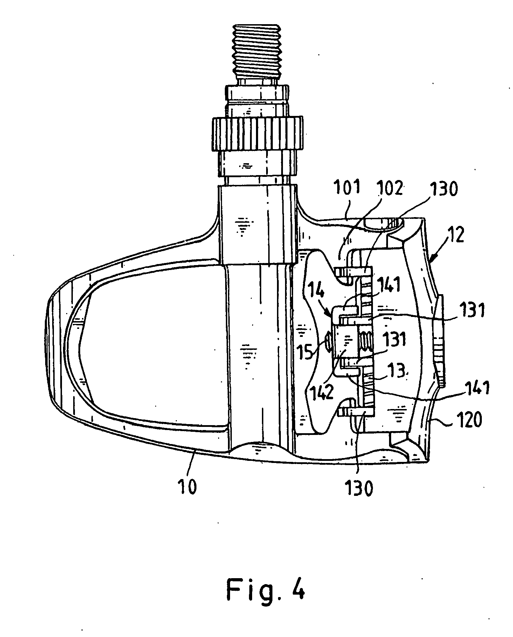

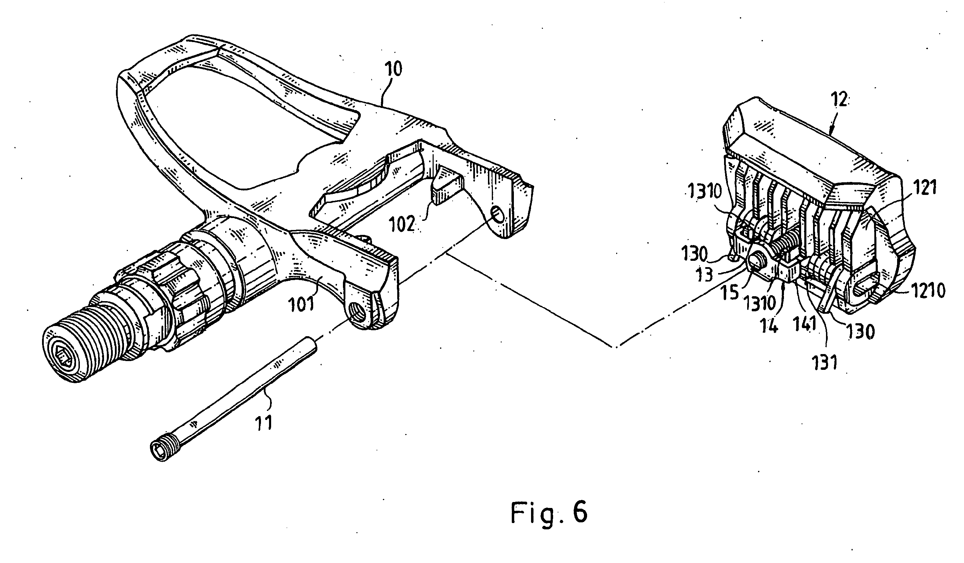

Referring to the drawings and initially to Figs. 1-6, a racing type pedal 1 in accordance with the preferred embodiment of the present invention comprises a main body 10, a pivot hook 12 pivotally mounted on the main body 10 by a pivot shaft 11, a metallic bushing 16 mounted on the pivot hook 12 and having a first end formed with a mounting tube 160 extended through the pivot hook 12 and directed toward the main body 10, an adjusting bolt 15 mounted on the bushing 16 and having a distal end extended through and protruding outward from the mounting tube 160 of the bushing 16, a press block 14 mounted on the distal end of the adjusting bolt 15 and located between the main body 10 and the pivot hook 12, and two torsion springs 13 each mounted on the pivot shaft 11 and each having a first end 130 urged on the main body 10 and a second end 13 urged on the press block 14.

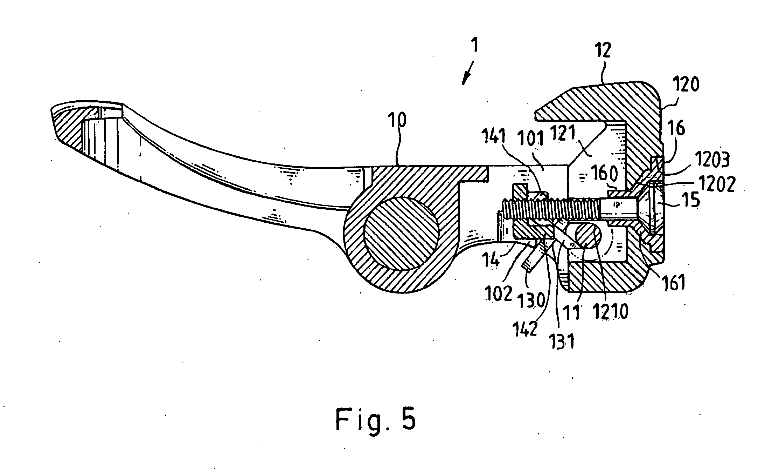

The main body 10 has a forked end formed with two spaced posts 101 each formed with a catch block 102 urged on the first end 130 of the respective torsion spring 13 as shown in Fig. 5.

The pivot hook 12 has a back plate 120 having an inside formed with a through hole 1201 mounted on the mounting tube 160 of the bushing 16. The through hole 1201 of the back plate 120 of the pivot hook 12 has a side formed with a tapered opening 1202 having a periphery formed with a flattened edge 1203. The pivot hook 12 has two side plates 121 each formed with a pivot hole 1210 pivotally mounted on the pivot shaft 11. The pivot hook 12 has an inside formed with two recesses 122 to receive the torsion springs 13.

The bushing 16 has a second end formed with a tapered head 161 mounted in the tapered opening 1202 of the back plate 120 of the pivot hook 12. The tapered head 161 of the bushing 16 has a periphery formed with a flattened face 1610 rested on the flattened edge 1203 of the tapered opening 1202 of the back plate 120 of the pivot hook 12. Preferably, the pivot hook 12 is integrally formed with the bushing 16.

The press block 14 has a center formed with a screw bore 140 screwed onto the distal end of the adjusting bolt 15. The press block 14 has two ends each formed with a bent first limit plate 141 rested on the second end 131 of the respective torsion spring 13 and has an edge formed with a bent second limit plate 142 rested on the second end 131 of each of the torsion springs 13, so that the torsion springs 13 form a double limit effect on the press block 14.

The second end 131 of each of the torsion springs 13 has a distal end formed with a bent abutment 1310 rested on the press block 14.

In operation, when the adjusting bolt 15 is rotated to move the press block 14 to adjust the torque of the pivot hook 12, movement of the adjusting bolt 15 is limited by the mounting tube 160 of the bushing 16, so that the adjusting bolt 15 performs a linear movement relative to the press block 14. In addition, movement of the press block 14 is limited by the second end 131 of each of the torsion springs 13, so that the press block 14 performs a linear movement without deflection.

Accordingly, the movement of the adjusting bolt 15 is limited by the mounting tube 160 of the bushing 16, and the movement of the press block 14 is limited by the torsion springs 13, so that the adjusting bolt 15 and the press block 14 form a linear movement without deflection, thereby producing an evenly distributed shearing stress between the adjusting bolt 15 and the press block 14, thereby preventing the adjusting bolt 15 and the press block 14 from being worn out due to an uneven shearing stress. In addition, the pivot hook 12 is mounted on the main body 10 easily and conveniently, thereby facilitating a user mounting the racing type pedal. Further, the adjusting bolt 15 is mounted on the back plate 120 of the pivot hook 12 by the metallic bushing 16, so that the whole weight of the racing type pedal is reduced.

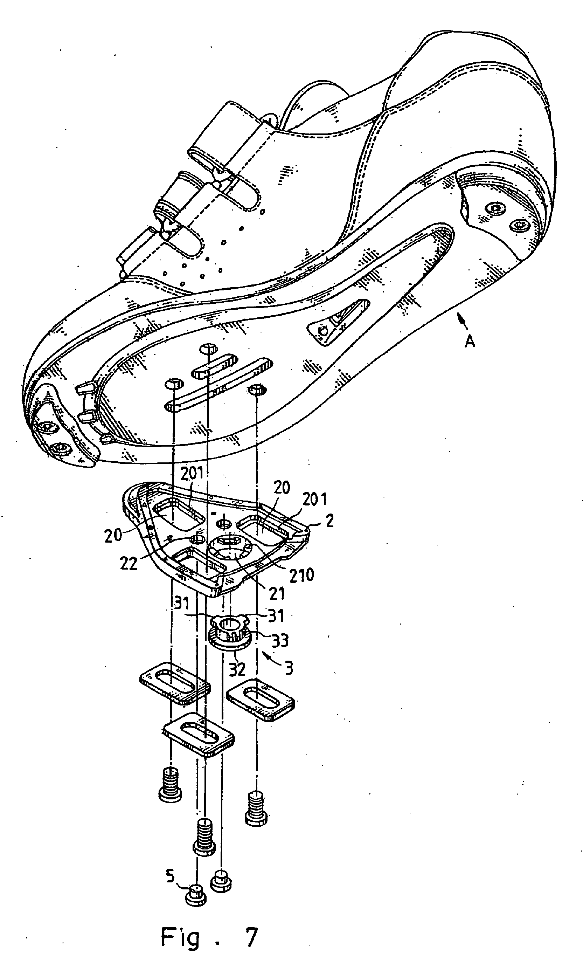

Referring to Figs. 7-9, a snap block structure in accordance with the preferred embodiment of the present invention is locked on each of a pair of road-use bicycle shoes "A" and placed on the racing type pedal 1, so that the racing type pedal 1 is available for the road-use bicycle shoes "A".

The snap block structure comprises a snapping plate 2, and an anti-skid pad 3.

The snapping plate 2 is rested on the bottom of each of the road-use bicycle shoes "A" and has a periphery formed with a plurality of mounting bores 20 for mounting washers and bolts so as to lock the snapping plate 2 on the bottom of each of the road-use bicycle shoes "A". Each of the mounting bores 20 of the snapping plate 2 has an inside formed with a catch edge 201. The snapping plate 2 is formed with a locking hole 21 having an inner wall formed with a plurality of protruding locking flanges 210.

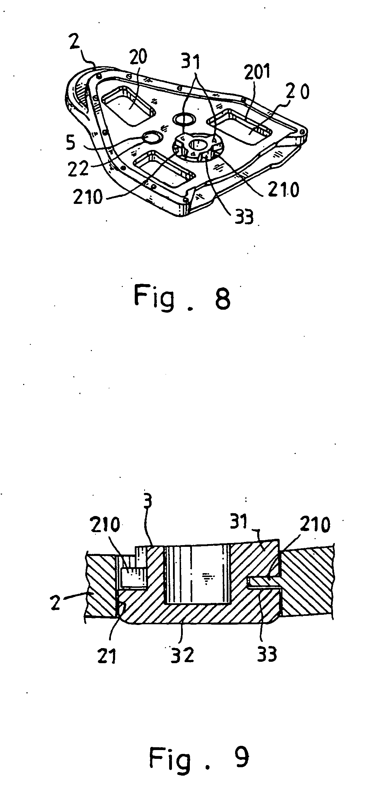

The anti-skid pad 3 is mounted in the locking hole 21 of the snapping plate 2 and has a top formed with a plurality of protruding locking lugs 31 locked, on the locking flanges 210 of the snapping plate 2, a mediate portion formed with an annular groove 33 to receive the locking flanges 210 of the snapping plate 2, and a bottom formed with a circular piece 32 protruding outward from a bottom face of the snapping plate 2 as shown in Fig. 9.

When the anti-skid pad 3 is inserted into the locking hole 21 of the snapping plate 2, the locking lugs 31 of the anti-skid pad 3 pass through gaps between the locking flanges 210 of the snapping plate 2 until the locking flanges 210 of the snapping plate 2 are aligned with the annular groove 33 of the anti-skid pad 3. Then, the anti-skid pad 3 is rotated relative to the snapping plate 2, so that the locking lugs 31 of the anti-skid pad 3 are locked on the locking flanges 210 of the snapping plate 2, thereby fixedly attach the anti-skid pad 3 to the snapping plate 2. At this time, the locking flanges 210 of the snapping plate 2 are received in the annular groove 33 of the anti-skid pad 3.

In addition, the circular piece 32 of the anti-skid pad 3 is slightly protruded outward from the bottom face of the snapping plate 2 as shown in Fig. 9, so that after the snapping plate 2 of the snap block structure is snapped onto the racing type pedal 1, the protruding anti-skid pad 3 is rested on the racing type pedal 1 to provide an anti-skid effect. Thus, each of the road-use bicycle shoes "A" is placed on the racing type pedal 1 closely and stably by provision of the snap block structure, so that the racing type pedal 1 is available for the road-use bicycle shoes "A".

Accordingly, the racing type pedal 1 is available for the road-use bicycle shoes "A" by provision of the snap block structure.

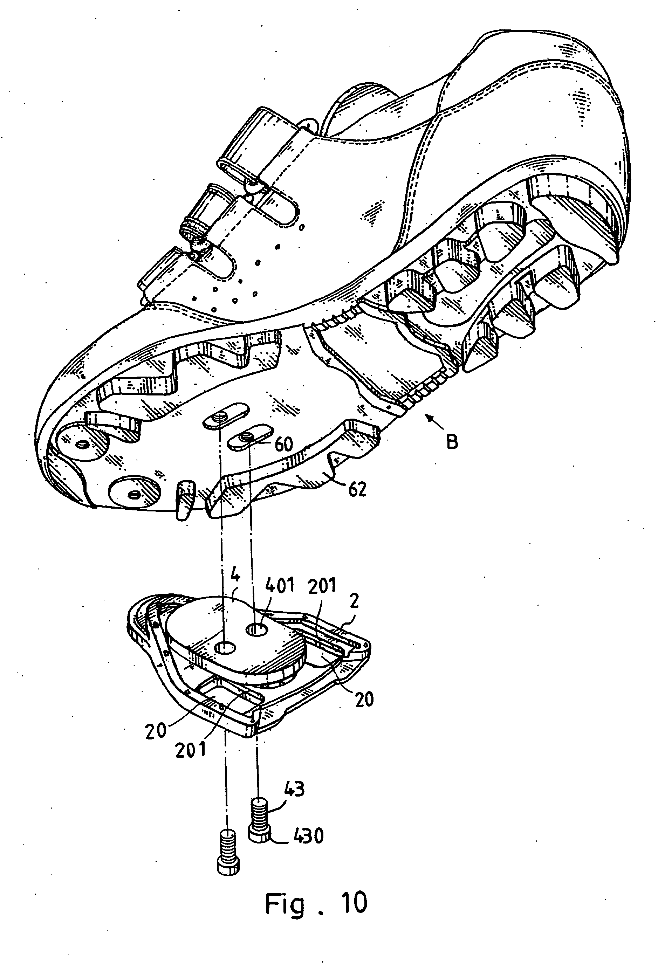

Referring to Figs. 10-12, a snap block structure in accordance with another embodiment of the present invention is locked on each of a pair of mountaineering shoes "B" and placed on the racing type pedal 1, so that the racing type pedal 1 is available for the mountaineering shoes "B". Each of the mountaineering bicycle shoes "B" has a bottom formed with two protruding spiked blocks 62 and two threaded locking holes 60 located between the two spiked blocks 62.

The snap block structure comprises a snapping plate 2, an anti-skid pad 3, an insertion plate 4, and two locking bolts 43.

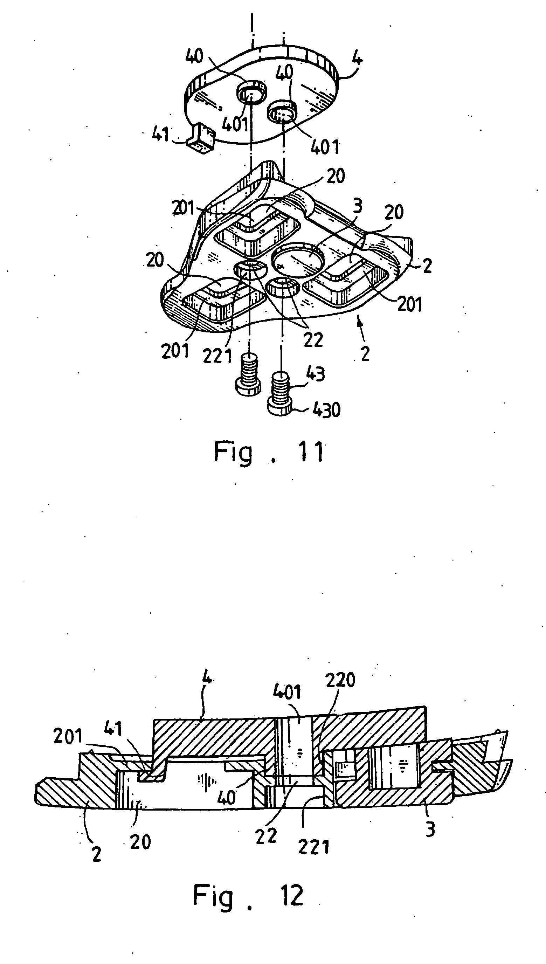

The snapping plate 2 is rested on the bottom of each of the mountaineering bicycle shoes "B" and has a mediate portion formed with two mounting holes 22 each having a first side formed with a stepped insertion recess 220 (see Fig. 12) and a second side formed with a stepped receiving recess 221.

The insertion plate 4 is mounted on the snapping plate 2 and located between the two spiked blocks 62 of each of the mountaineering bicycle shoes "B". The insertion plate 4 is slightly smaller than the snapping plate 2 and has a mediate portion formed with two protruding stubs 40 each inserted into the insertion recess 220 of a respective one of the two mounting holes 22 of the snapping plate 2 and each formed with a through hole 401 aligning with a respective one of the two mounting holes 22 of the snapping plate 2 and a respective one of the two locking holes 60 of each of the mountaineering bicycle shoes "B". The insertion plate 4 has a side formed with a hook-shaped elastic locking leg 41 inserted into one of the mounting bores 20 of the snapping plate 2 and locked on the catch edge 201 of the respective mounting bore 20 as shown in Fig. 12, so that the insertion plate 4 is secured on the snapping plate 2. In addition, the insertion plate 4 is protruded outward from the top face of the snapping plate 2 as shown in Fig. 12.

Each of the two locking bolts 43 is extended through a respective one of the two mounting holes 22 of the snapping plate 2 and the through hole 401 of a respective one of the two protruding stubs 40 of the insertion plate 4, and screwed into a respective one of the two locking holes 60 of each of the mountaineering bicycle shoes "B" to fix the snapping plate 2 on each of the mountaineering bicycle shoes "B". Each of the two locking bolts 43 has a bolt head 430 received in the receiving recess 221 of a respective one of the two mounting holes 22 of the snapping plate 2.

When in use, the snapping plate 2 is secured on each of the mountaineering bicycle shoes "B" by the two locking bolts 43, so that the snap block structure is mounted on each of the mountaineering bicycle shoes "B". In such a manner, the insertion plate 4 is protruded outward from the top face of the snapping plate 2 and located between the two spiked blocks 62 of each of the mountaineering bicycle shoes "B", and the snapping plate 2 is snapped onto the racing type pedal 1, so that the racing type pedal 1 is available for the mountaineering shoes "B".

Accordingly, the racing type pedal 1 is available for the mountaineering shoes "B" by provision of the snap block structure.

As shown in Figs. 7 and 8, the snap block structure further comprises two plugs 5 each detachably inserted into a respective one of the two mounting holes 22 of the snapping plate so that the snapping plate 2 is used individually.

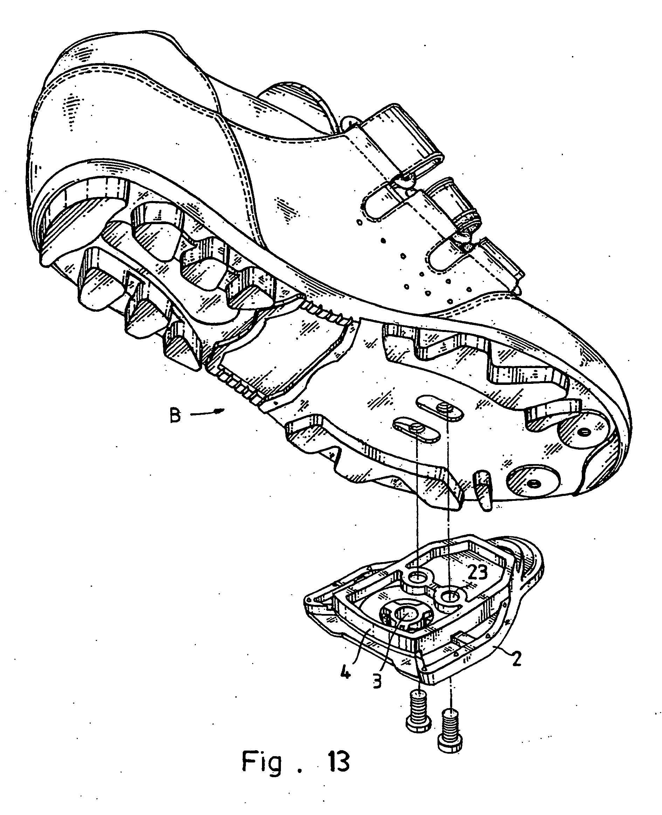

Referring to Fig. 13, the snapping plate 2 is integrally formed with the insertion plate 4.

Accordingly, the racing type pedal 1 is both available for the road-use bicycle shoes "A" and the mountaineering shoes "B" by provision of the snapblock structure, thereby greatly enhancing the versatility of the racing type pedal 1.

## Claims

1. A racing type pedal set including a racing type pedal and a snap block structure,
wherein the racing type pedal comprises:
a main body (10);
a pivot hook (12) pivotally mounted on the main body (10) by a pivot shaft (11);
a metallic bushing (16) mounted on the pivot hook (12) and having a first end formed with a mounting tube (160) extended through the pivot hook and directed toward the main body (10);
an adjusting bolt (15) mounted on the bushing (16) and having a distal end extended through and protruding outward from the mounting tube (160) of the bushing (16);
a press block (14) mounted on the distal end of the adjusting bolt (15) and located between the main body (10) and the pivot hook (12); and
two torsion springs (13) each mounted on the pivot shaft and each having a first end urged on the main body (10) and a second end urged on the press block (14);
**characterized in that**
the snap block structure comprises:
a snapping plate (2) formed with a locking hole (21);
an anti-skid pad (3) mounted in the locking hole of the snapping plate and protruded outward from the snapping plate; and
an insertion plate (4) mounted on the snapping plate (2) and protruded outward from a top face of the snapping plate (2).

2. The racing type pedal set in accordance with claim 1,
**characterized in that**
the locking hole (21) of the snapping plate (2) has an inner wall formed with a plurality of protruding locking flanges, and that the anti-skid pad (3) has a top formed with a plurality of protruding locking lugs (31) locked on the locking flanges (210) of the snapping plate (2), a mediate portion formed with an annular groove (33) to receive the locking flanges (210) of the snapping plate (2), and a bottom formed with a circular piece protruding outward from a 10 bottom face of the snapping plate (2).

3. The racing type pedal set in accordance with one of the preceding claims,
**characterized in that**
the snapping plate (2) has a mediate portion formed with two mounting holes (22) each having a first side formed with a stepped insertion recess (220) and a second side formed with a stepped receiving recess (221), the insertion plate (4) has a mediate portion formed with two protruding stubs (40) each inserted into the insertion recess (220) of a respective one of the two mounting holes (22) of the snapping plate (2) and each formed with a through hole (401) aligning with a respective one of the two mounting holes (22) of the snapping plate (2).

4. The racing type pedal set in accordance with claim 3,
**characterized in that**
the snap block structure further comprising two locking bolts (43) each extended through a respective one of the two mounting holes (22) of the snapping plate (2) and the through hole of a respective one of the two protruding stubs of the insertion plate.

5. The racing type pedal set in accordance with one of claims 3 or 4,
**characterized in that**
the snapping plate (2) has a periphery formed with a plurality of mounting bores (20) each having an inside formed with a catch edge (201), and the insertion plate (4) has a side formed with a hook-shaped elastic locking leg (41) inserted into one of the mounting bores (20) of the snapping plate (2) and locked on the catch edge (201) of the respective mounting bore, so that the insertion plate (4) is secured on the snapping plate (2).

6. The racing type pedal set in accordance with one of the preceding claims,
**characterized in that**
the pivot hook (12) has a back plate (120) having an inside formed with a through hole (1201) mounted on the mounting tube (160) of the bushing (16), the through hole (1201) of the back plate of the pivot hook has a side formed with a tapered opening (1202) having a periphery formed with a flattened edge (1203), and that the bushing has a second end formed with a tapered head (161) mounted in the tapered opening (1202) of the back plate of the pivot hook (12) and having a periphery formed with a flattened face (1610) rested on the flattened edge (1203) of the tapered opening (1202) of the back plate (120) of the pivot hook (12).

7. The racing type pedal set in accordance with one of the preceding claims,
**characterized in that**
the press block (14) has two ends each formed with a bent first limit plate rested on the second end (131) of the respective torsion spring (13) and has an edge formed with a bent second limit plate (142) rested on the second end (131) of each of the torsion springs (13), so that the torsion springs (13) form a double limit effect on the press block (14).

8. The racing type pedal set in accordance with one of the preceding claims,
**characterized in that**
the second end (131) of each of the torsion springs (13) has a distal end formed with a bent abutment (1310) rested on the press block (14).

9. The racing type pedal set in accordance with one of the preceding claims,
**characterized in that**
the press block (14) has a center formed with a screw bore (140) screwed onto the distal end of the adjusting bolt (15).

## Patentansprüche

1. Fahrradpedalsystem mit einem Fahrradpedal und einer Schnappblock-Anordnung,
wobei das Fahrradpedal aufweist:
einen Hauptkörper (10),
einen drehbaren Haken (12), der an dem Hauptkörper (10) durch eine Drehwelle (11) drehbar befestigt ist,
eine metallische Muffe (16), die an dem drehbaren Haken (12) angebracht ist und deren erstes Ende als ein Befestigungsrohr (160) ausgebildet ist, das durch den drehbaren Haken hindurch verläuft und zu dem Hauptkörper (10) gerichtet ist,
eine Einstellschraube (15), die an der Muffe (16) befestigt ist und deren äußeres Ende durch das Befestigungsrohr (160) der Muffe (16) hindurch verläuft und von diesem nach außen ragt,
ein Andruckblock (14), der an dem äußeren Ende der Einstellschraube (15) befestigt ist und sich zwischen dem Hauptkörper (10) und dem drehbaren Haken (12) befindet, und zwei Torsionsfedern (13), von denen jede auf der Drehwelle befestigt ist und deren eines Ende gegen den Hauptkörper (10) und deren weiteres Ende gegen den Andruckblock (14) gedrückt wird,
**dadurch gekennzeichnet,**
**dass** die Schnappblock-Anordnung aufweist:
eine Einschnappplatte (2), die mit einem Einrastloch (21) versehen ist,
ein Gleitschutzkissen (3), das in dem Einrastloch der Einschnappplatte befestigt ist und aus der Einschnappplatte hervorragt und
eine Einsetzplatte (4), die auf der Einschnappplatte (2) befestigt ist und von der Oberfläche der Einschnappplatte (2) nach außen ragt.

2. Fahrradpedalsystem nach Anspruch 1,
**dadurch gekennzeichnet,**
**dass** das Einrastloch (21) der Einschnappplatte (2) an seiner Innenwand mehrere vorstehende Einrastflansche aufweist, und dass das Gleitschutzkissen (3) an seinem oberen Ende mehrere vorstehende Einrastansätze (31) aufweist, die in die Einrastflansche (210) der Einschnappplatte (2) einrasten, wobei sich im mittleren Teil eine ringförmige Rille (33) befindet, die die Einrastflansche (210) der Einschnappplatte (2) aufnimmt, und einen unteren Teil, der kreisförmig ausgebildet ist und aus der Bodenfläche der Einschnappplatte (2) herausragt

3. Fahrradpedalsystem nach einem der vorhergehenden Ansprüche,
**dadurch gekennzeichnet,**
**dass** die Einschnappplatte (2) einen mittleren Teil aufweist, der mit zwei Befestigungslöchern (22) versehen ist, von denen jedes ein erstes Ende aufweist, das mit einer gestuften Einsatzaussparung (220) versehen ist und ein zweites Ende aufweist, das mit einer gestuften Aufnahmeaussparung (221) versehen ist, dass die Einsetzplatte (4) einen mittleren Teil aufweist, der mit vorspringenden Stümpfen (40) versehen ist, die jeweils in die Einsetzaussparung (220) einer der entsprechenden beiden Befestigungsbohrungen (22) der Einschnappplatte (2) eingesetzt sind und die jeweils eine Durchbohrung (401) aufweisen, die mit einem entsprechenden der beiden Befestigungslöcher (22) der Einschnappplatte (2) ausgerichtet sind.

4. Fahrradpedalsystem nach Anspruch 3,
**dadurch gekennzeichnet,**
**dass** die Schnappblock-Anordnung ferner zwei Verschlussschrauben (43) enthält, die jeweils durch eine der beiden Befestigungsbohrungen (22) der Einschnappplatte (2) und durch die Durchbohrung der entsprechenden der beiden vorstehenden Stümpfe der Einsetzplatte hindurch verlaufen.

5. Fahrradpedalsystem nach einem der Ansprüche 3 oder 4,
**dadurch gekennzeichnet,**
**dass** die Einschnappplatte (2) an ihrem Umfang mehrere Befestigungsdurchbrechungen (20) aufweist, die jeweils an ihrer Innenseite mit einer Eingriffskante (201) versehen sind, und dass die Einsetzplatte (4) an ihrer einen Seite als hakenförmiger elastischer Einrastarm (41) ausgebildet ist, der in eine der Befestigungsdurchbohrungen (20) der Einschnappplatte eingesetzt ist und in die Eingriffskante (201) der entsprechenden Befestigungsdurchbrechung einrastet, so dass die Einsetzplatte (4) an der Einschnappplatte (2) arretiert ist.

6. Fahrradpedalsystem nach einem der vorhergehenden Ansprüche,
**dadurch gekennzeichnet,**
**dass** der drehbare Haken (12) eine Rückwand (120) aufweist, von deren Innenseite eine Durchbohrung (1201) verläuft, in der das Befestigungsrohr (160) der Muffe (16) befestigt ist, das die Durchbohrung (1201) der Rückwand des drehbaren Hakens an ihrer einen Seite mit einer konischen Öffnung (1202) versehen ist, die an ihrem Umfang mit einem ebenen Rand (1203) versehen ist und, dass die Muffe an ihrem zweiten Ende einen konischen Kopf (161) aufweist, der in der konischen Öffnung (1202) der Rückwand des drehbaren Hakens (1,2) befestigt ist, wobei sie an ihrem Umfang mit einer ebenen Fläche (1610) versehen ist, die auf der ebenen Kante (1203) der konischen Öffnung (1202) der Rückwand (120) des drehbaren Hakens (1,2) aufsitzt.

7. Fahrradpedalsystem nach einem der vorhergehenden Ansprüche,
**dadurch gekennzeichnet,**
**dass** der Andruckblock zwei Enden aufweist, von denen jedes als eine gebogene erste Begrenzungsplatte ausgebildet ist, die auf dem zweiten Ende (131) der entsprechenden Torsionsfeder (13) aufsitzt und eine Kante hat, die mit einer gebogenen zweiten Begrenzungsplatte (142) versehen ist, und die auf dem zweiten Ende (131) jeder der Torsionsfedern (13) aufsitzt, so dass die Torsionsfedern (13) einen doppelten Begrenzungseffekt für den Andruckblock (14) bilden.

8. Fahrradpedalsystem nach einem der vorhergehenden Ansprüche,
**dadurch gekennzeichnet,**
**dass** das zweite Ende (131) jeder der Torsionsfedern (13) ein äußerstes Endstück aufweist, das mit einem umgebogenen Vorsprung (1310) versehen ist, der auf dem Andruckblock (14) aufliegt.

9. Fahrradpedalsystem nach einem der vorhergehenden Ansprüche,
**dadurch gekennzeichnet,**
**dass** der Andruckblock (14) in seiner Mitte eine Gewindebohrung (140) aufweist, in die das äußerste Ende der Einstellschraube (15) einschraubbar ist.

## Revendications

1. Ensemble de pédale de type course comprenant une pédale de type course et une structure de bloc d'encliquetage,
la pédale de type course comprenant :
- un corps principal (10) ;
- un crochet pivotant (12) monté à pivotement sur le corps principal (10) par l'intermédiaire d'un axe de pivot (11) ;
- une douille métallique (16) montée sur le crochet pivotant (12) et ayant une première extrémité comportant un tube de montage (160) s'étendant à travers le crochet pivotant et dirigé vers le corps principal (10) ;
- un boulon de réglage (15) monté sur la douille (16) et ayant une extrémité distale s'étendant à travers et faisant saillie vers l'extérieur à partir du tube de montage (160) de la douille (16) ;
- un bloc de pression (14) monté sur l'extrémité distale du boulon de réglage (15) et situé entre le corps principal (10) et le crochet pivotant (12) ; et
- deux ressorts de torsion (13) montés chacun sur l'arbre de pivot et ayant chacun une première extrémité poussée sur le corps principal (10) et une seconde extrémité poussée sur le bloc de pression (14) ;
**caractérisé par le fait que**
la structure de bloc d'encliquetage comprend :
- une plaque d'encliquetage (2) comportant un trou de blocage (21) ;
- un patin antidérapant (3) monté dans le trou de blocage de la plaque d'encliquetage et faisant saillie vers l'extérieur à partir de la plaque d'encliquetage ; et
- une plaque d'introduction (4) montée sur la plaque d'encliquetage (2) et faisant saillie vers l'extérieur à partir d'une face supérieure de la plaque d'encliquetage (2).

2. Ensemble de pédale de type course selon la revendication 1,
**caractérisé par le fait que**
le trou de blocage (21) de la plaque d'encliquetage (2) a une paroi interne comportant une pluralité de rebords de blocage en saillie, et **par le fait que** le patin antidérapant (3) a une partie supérieure comportant une pluralité de pattes de blocage en saillie (31) bloquées sur les rebords de blocage (210) de la plaque d'encliquetage (2), une partie intermédiaire comportant une rainure annulaire (33) pour recevoir les rebords de blocage (210) de la plaque d'encliquetage (2), et une partie inférieure comportant une pièce circulaire faisant saillie vers l'extérieur à partir d'une face inférieure de la plaque d'encliquetage (2).

3. Ensemble de pédale de type course selon l'une quelconque des revendications précédentes,
**caractérisé par le fait que**
la plaque d'encliquetage (2) a une partie intermédiaire comportant deux trous de montage (22) ayant chacun un premier côté comportant un creux d'introduction étagé (220) et un second côté comportant un creux de réception étagé (221), la plaque d'introduction (4) a une partie intermédiaire comportant deux ergots en saillie (40) chacun introduit dans le creux d'introduction (220) d'un trou de montage respectif des deux trous de montage (22) de la plaque d'encliquetage (2) et comportant chacun un trou traversant (401) s'alignant avec un trou de montage respectif des deux trous de montage (22) de la plaque d'encliquetage (2).

4. Ensemble de pédale de type course selon la revendication 3,
**caractérisé par le fait que**
la structure de bloc d'encliquetage comprend en outre deux boulons de blocage (43) s'étendant chacun à travers un trou de montage respectif des deux trous de montage (22) de la plaque d'encliquetage (2) et le trou traversant d'un ergot en saillie respectif des deux ergots en saillie de la plaque d'introduction.

5. Ensemble de pédale de type course selon l'une des revendications 3 ou 4,
**caractérisé par le fait que**
la plaque d'encliquetage (2) a une périphérie comportant une pluralité d'alésages de montage (20) ayant chacun un intérieur comportant un bord de saisie (201), et la plaque d'introduction (4) a un côté comportant une patte de blocage élastique en forme de crochet (41) introduite dans l'un des alésages de montage (20) de la plaque d'encliquetage (2) et bloquée sur le bord de saisie (201) de l'alésage de montage respectif, de telle sorte que la plaque d'introduction (4) est fixée sur la plaque d'encliquetage (2).

6. Ensemble de pédale de type course selon l'une des revendications précédentes,
**caractérisé par le fait que**
le crochet pivotant (12) a une plaque d'appui (120) ayant un intérieur comportant un trou traversant (1201) monté sur le tube de montage (160) de la douille (16), le trou traversant (1201) de la plaque d'appui du crochet pivotant ayant un côté comportant une ouverture effilée (1202) ayant une périphérie comportant un bord aplati (1203), et **par le fait que** la douille a une seconde extrémité comportant une tête effilée (161) montée dans l'ouverture effilée (1202) de la plaque d'appui du crochet pivotant (12) et ayant une périphérie comportant une face aplatie (1610) reposant sur le bord aplati (1203) de l'ouverture effilée (1202) de la plaque d'appui (120) du crochet pivotant (12).

7. Ensemble de pédale de type course selon l'une des revendications précédentes,
**caractérisé par le fait que**
le bloc de pression (14) a deux extrémités comportant chacune une première plaque de butée courbée reposant sur la seconde extrémité (131) du ressort de torsion respectif (13) et a un bord comportant une seconde plaque de butée courbée (142) reposant sur la seconde extrémité (131) de chacun des ressorts de torsion (13), de telle sorte que les ressorts de torsion (13) ont un effet de double butée sur le bloc de pression (14).

8. Ensemble de pédale de type course selon l'une des revendications précédentes,
**caractérisé par le fait que**
la seconde extrémité (131) de chacun des ressorts de torsion (13) a une extrémité distale comportant une butée incurvée (1310) reposant sur le bloc de pression (14).

9. Ensemble de pédale de type course selon l'une des revendications précédentes,
**caractérisé par le fait que**
le bloc de pression (14) a un centre comportant un alésage taraudé (140) vissé sur l'extrémité distale du boulon de réglage (15).
